(19) Europäisches Patentamt / European Patent Office / Office européen des brevets

(11) **EP 4 714 774 A1**

(12) **EUROPEAN PATENT APPLICATION**

(43) Date of publication:
25.03.2026 Bulletin 2026/13

(21) Application number: 25201557.3

(22) Date of filing: 11.09.2025

(51) International Patent Classification (IPC):
**B60W 50/06** (2006.01) **B60W 30/045** (2012.01)
**B62D 6/00** (2006.01)

(52) Cooperative Patent Classification (CPC):
**B60W 50/06; B60W 30/045;** B60W 2050/0011;
B60W 2050/0034; B60W 2050/0083;
B60W 2520/105; B60W 2520/125; B60W 2520/14;
B60W 2540/18; B60W 2710/207; B60W 2720/106;
B60W 2720/125

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 18.09.2024 IT 202400020779

(71) Applicant: FERRARI S.p.A.
41100 Modena (IT)

(72) Inventors:
• FLUMERI, Alessandro
41100 MODENA (IT)
• MINCIGRUCCI, Francesca
41100 MODENA (IT)
• CANZI, Davide
41100 MODENA (IT)

(74) Representative: Studio Torta S.p.A.
Via Viotti, 9
10121 Torino (IT)

(54) **CONTROL SYSTEM FOR CONTROLLING ACTUATORS IN A VEHICLE**

(57) A control system (10) is described, configured to implement a real-time control of at least one actuator device (7) in a vehicle (1), having a first control loop (10a) provided with: a digital twin model (12), configured to implement a virtual representation replicating the behavior of the vehicle (1); and a digital controller (14), configured to output a control signal (SCMD) to be provided to the actuator device of the vehicle (1), based on a feedback control loop closed on the digital twin model (12). The control system (10) may have a second control loop (10b), configured to generate a compensation of the control action implemented by the first control loop (10a) prior to sending an actual command to the vehicle (1), based on a difference between an actual behavior of the vehicle (1) and the behavior replicated by the digital twin model (12).

FIG. 2

EP 4 714 774 A1

# EP 4 714 774 A1

**Description**

This patent application claims priority from Italian patent application no. 102024000020779 filed on September 18, 2024, the entire disclosure of which is incorporated herein by reference.

## BACKGROUND

The present solution relates to an improved control system for controlling actuators in a vehicle, in particular a motor vehicle.

## PRIOR ART

As is known, motor vehicles of recent manufacture are equipped with several electronic control systems, such as, for example, Traction Control Systems (TCS), Electronic Stability Program/ Electronic Stability Control Systems (ESP/ESC) or Anti-lock Braking Systems (ABS), to name just a few.

The functioning of these electronic control systems is based on real-time detection of a certain number of quantities associated with the operation of the motor vehicle, such as, for example, speed, accelerations, steering angles and so on.

These quantities are detected by a plurality of sensors on-board the motor vehicle, which provide raw signals that are then subjected to digital processing operations, for example amplification and filtering operations, in order to make them available to one or more control units of the motor vehicle (typically at least one main control unit, usually known as ECU - Electronic Control Unit).

These control units are then configured to implement a plurality of control logics, in real time while the vehicle is travelling, for controlling various actuators or similar devices in the vehicle.

The control logics are closed in a feedback loop on the quantities detected by the sensors in the vehicle or, alternatively, on quantities estimated starting from the same detected quantities (when it is not possible, or not advantageous, to use dedicated sensors for detection of such quantities).

In particular, in the commonly used solutions, each quantity (or state) is estimated with a dedicated estimation algorithm (for example, by means of an estimator of the vehicle speed, an estimator of the side slip, etc.); in the aforesaid control logics, the control loop is therefore closed on the measurements provided as a feedback by the sensors and/or on the estimates provided by the estimators in the vehicle.

Although efficient, the control solutions currently used are rather complex and expensive in terms of resources, with respect to the tests required for validation and inspection (for example, due to the fact that it is required to test a plurality of different estimation and control algorithms).

## OBJECT OF THE INVENTION

The aim of the present solution is generally to provide an improved solution for controlling actuators in a vehicle, which may allow the problems discussed above to be overcome or at least limited.

In accordance with this object, according to the present solution a control system is provided, as defined in the appended claims.

## BRIEF DESCRIPTION OF THE DRAWINGS

The present invention will now be described with reference to the appended drawings, which illustrate a non-limiting embodiment thereof, wherein:

- Figure 1 schematically shows a motor vehicle provided with a control system implemented in a corresponding electronic control unit;
- Figure 2 is a block diagram of the control system in the motor vehicle of Figure 1, in a first embodiment;
- Figure 3 is a block diagram of the control system, in a second embodiment;
- Figure 4 is a schematic representation of the motor vehicle, on which main quantities of a corresponding dynamic model used as a "digital twin" are depicted;
- Figure 5 shows a block diagram of a possible implementation of an estimator in the control system;
- Figure 6 shows a possible example of implementation of the control system, for a "steer-by-wire" system; and
- Figures 7A-7C and 8A-8C show plots related to the control performance, respectively for a solution of a known type and for the control system according to the present solution.

DETAILED DESCRIPTION OF EMBODIMENTS

As will be described in detail below, an aspect of the present solution provides for implementing, within a vehicle control unit (for example, in a corresponding ECU), a so-called "digital twin" model of the vehicle, designed to output a plurality of states, i.e. quantities associated with the behavior of the vehicle; and closing one or more feedback control loops, for generation of commands to be imparted to actuators of the vehicle, on the outputs of the digital twin model, rather than on measurements provided by actual sensors in the vehicle or on estimates generated based on the measurements provided by the actual sensors.

Advantageously, this solution allows better control performance, thanks to closure of the control loop on a digital model (which, by its very nature, has no uncertainties and measurement noise); furthermore, this solution makes calibration of the control system quicker and less expensive in terms of resources (given that the calibration during simulation can be the same as the one that is used in the vehicle).

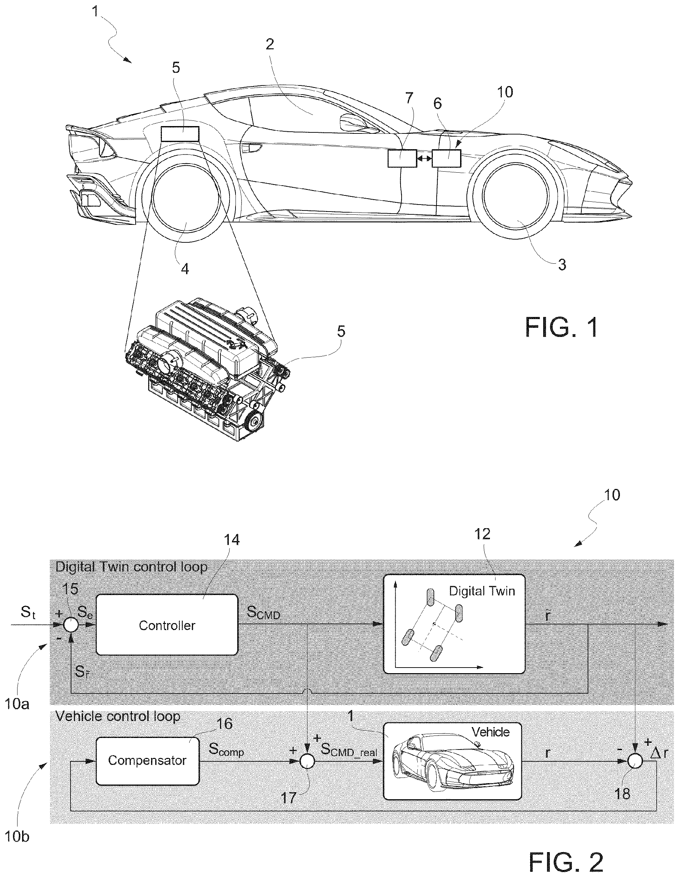

Figure 1 shows a vehicle, in particular a motor vehicle 1, provided with a passenger compartment 2, with two front wheels 3 (therefore belonging to a same front axle) and with two rear wheels 3 (therefore belonging to a same rear axle); at least one of such rear and front axles receiving a driving torque from a powertrain 5 (shown in the example at the rear position) of the motor vehicle 1, of traditional, hybrid or electric type.

The motor vehicle 1 comprises at least one electronic control unit (the so-called "ECU") 6 which, among its other functions, manages and controls the general behavior of the motor vehicle 1 and the corresponding main systems, including, for example, the powertrain 5, intervening on the torque provided, the transmission, the brakes, possibly in collaboration with other actuations in the motor vehicle 1.

The electronic control unit 6 can be formed of a single digital processing device (with a microprocessor, micro controller or similar), or of several devices that are separated from each other and coupled in communication, for example through the CAN of the motor vehicle 1.

The motor vehicle 1 may comprise further control units, for example one or more VCUs (Vehicle Control Unit), dedicated to control and monitoring of devices/sensors on-board the vehicle.

The control unit 6 (or a further control unit in the motor vehicle 1) is configured to implement a real-time control system, indicated in general with 10, for controlling one or more actuator devices, indicated in general with 7, in the same vehicle 1 (such as, for example, devices for actuation of the steering, brakes, accelerator, or similar, in so-called "by-wire" actuation systems, i.e. using electrical or electromechanical connections rather than purely mechanical connections).

As shown in Figure 2, the control system 10 comprises a first control loop 10a, which is closed on a "Digital Twin" model of the motor vehicle 1; and a second control loop 10b, which is closed directly on the motor vehicle 1.

The first control loop 10a comprises a digital twin model 12 configured to implement a virtual representation (or modelling), which faithfully replicates the behavior, in particular the dynamic behavior, of the motor vehicle 1.

This digital twin model 12 is configured to output a vector of states, indicated with $\bar{r}$, including actual values (updated in real time) of a plurality of quantities associated with the aforesaid behavior of the motor vehicle 1, including, for example, speed, accelerations, steering angles or angles at the wheels, pitch and roll angles, "heave" movements, ground forces or grip.

In other words, the digital model 12 outputs a plurality of state signals, each associated with a respective one of the aforesaid quantities.

The first control loop 10a comprises a digital controller 14, for example a proportional-integrative-derivative controller (PID), a predictive controller (MPC - Model Predictive Control), a "sliding mode" controller or an H-infinity controller, configured to receive as an input an error signal $S_e$, generated by a subtractor stage 15, based on the difference between a target signal $S_t$ and a corresponding state signal $S_{\bar{r}}$ provided as an output from the aforesaid digital twin model 12 and included in the vector of states $\bar{r}$.

The digital controller 14 is configured to output a control signal $S_{CMD}$ to be provided to an actuator device 7 of the motor vehicle 1 as a function of the error signal $S_e$, therefore based on a feedback control loop closed on the digital twin model 12 (rather than physically on the motor vehicle 1).

The control signal $S_{CMD}$ is provided as an input to the same digital twin model 12, so as to replicate the (actual) control action implemented on the motor vehicle 1 and modify accordingly the vector of states $\bar{r}$ provided as an output.

The aforementioned second control loop 10b comprises a compensator 16, configured to output a compensation signal $S_{comp}$, based on a difference between the actual behavior of the motor vehicle 1 and the behavior replicated by the digital twin model 12 (such difference therefore being indicative of the effectiveness of the digital twin model 12 and its performance in faithfully replicating the behavior of the motor vehicle 1).

In particular, the second control loop 10b comprises a first combination stage 17, which receives as an input the aforesaid compensation signal $S_{comp}$ and also the aforesaid control signal $S_{CMD}$ and is configured to generate an effective or actual control signal $S_{CMD\_real}$, which is physically provided to the motor vehicle 1, in particular to a corresponding actuator device 7 in order to implement the actual control action.

In the implementation illustrated, the first combination stage 17 is a summing stage and is configured to generate the actual control signal $S_{CMD\_real}$ as a sum between the aforementioned compensation signal $S_{comp}$ and the control signal $S_{CMD}$.

The second control loop 10b also comprises a second combination stage 18, in particular a subtractor stage, which receives as an input the vector of states $\bar{r}$ output by the digital twin model 12 and also a vector of measurements r provided by a plurality of sensors physically arranged in the motor vehicle 1, for example inertial sensors (accelerometers, gyroscopes, force sensors, angular sensors, etc.).

The second combination stage 18 provides as an output a difference vector $\Delta r$, based on the combination, in particular based on the difference, between the aforesaid vector of states $\bar{r}$ and vector of measurements r; this difference vector $\Delta r$ is provided as an input to the compensator 16, and is therefore indicative of the aforesaid difference between the actual behavior of the motor vehicle 1 and the behavior replicated by the digital twin model 12.

It is noted that the aforesaid compensator 16 can be a controller that is simple to design and implement, for example a proportional-integrative-derivative controller (PID controller), given that minimum differences (with slow dynamics to be compensated) are generally expected between the actual behavior of the motor vehicle 1 and the behavior defined by the digital twin model 12 (which is, in fact, configured to faithfully replicate the behavior of the same motor vehicle 1).

The second control loop 10b, by comparing the states measured starting from the motor vehicle 1 and those output by the digital twin model 12, therefore allows a compensation of the control action to be generated before sending the actual command to the motor vehicle 1 (the aforesaid actual control signal $S_{CMD\_real}$) that determines the actual control action on the motor vehicle 1.

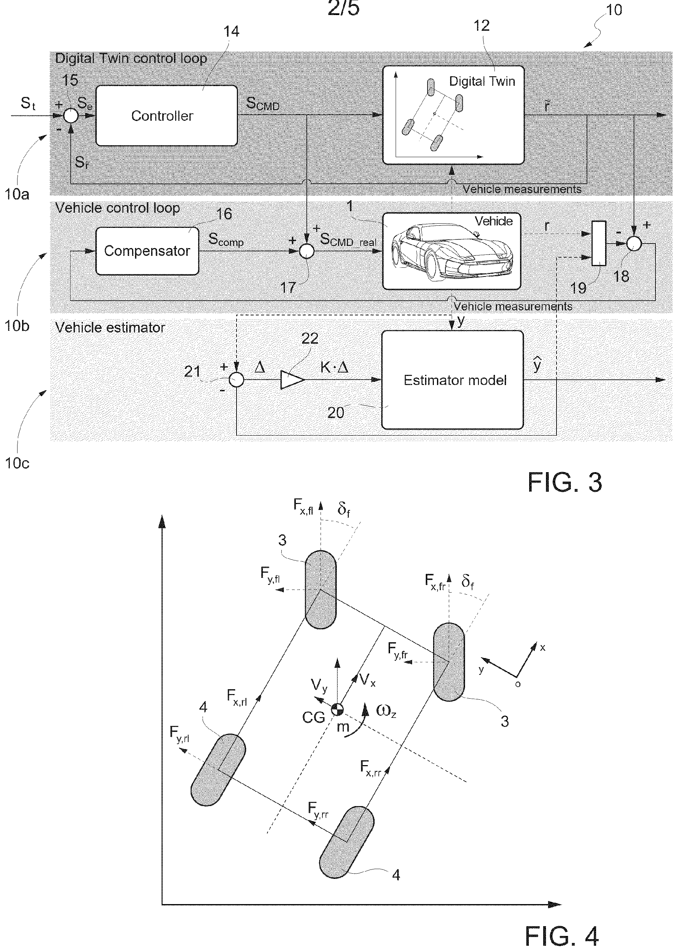

As shown in Figure 3, in a possible embodiment, the aforesaid control signal 10 further comprises an estimation stage 10c, including a state estimator 20, configured to implement, in particular in real time during operation of the motor vehicle 1, estimation algorithms (for example, based on a digital model that replicates the behavior of the motor vehicle 1 to estimate quantities that cannot be measured on the actual vehicle), in order to output a vector of estimations $\hat{y}$, including a plurality of estimated quantities associated with the behavior of the same motor vehicle 1.

In a possible implementation, as will also be discussed in detail below, the state estimator 20 is based on a Kalman filter implementation, which allows improvement of the estimations of the signals based on a correction of the internal states of the model, taking into account the measurement noise of the sensors in the actual vehicle.

In this embodiment, the aforesaid second control loop 10b comprises a concatenator stage 19, for example including a multiplexer, that receives as an input both the vector of measurements r provided by the sensors physically arranged in the motor vehicle 1, and the vector of estimations $\bar{y}$ provided by the state estimator 20.

In particular, in this case, such vector of estimations $\bar{y}$ can be designed to complete the vector of measurements r to obtain the full set of states output by the digital twin model 12 (vector of states $\bar{r}$). In other words, in this case, some of the quantities that define the behavior of the motor vehicle 1, in particular the dynamic behavior, are measured by means of physical sensors, whereas others are estimated by means of digital estimation algorithms.

The aforesaid second control loop 10b is therefore configured, in this case, to compare both the measured states and the estimated states of the actual vehicle with corresponding states output by the digital twin model, so as to generate the compensation of the control action and to generate the actual commands for the motor vehicle 1 and to determine the actual control action. In other words, the aforesaid concatenator stage 19 is configured to provide, at the difference input of the second combination stage 18, both the vector of measurements r and the vector of estimates $\bar{y}$.

The state estimator 20 is further configured to receive as an input a correction factor, which is a function of a difference or deviation between at least some of the estimates in the vector of estimates $\bar{y}$ and at least some corresponding measurements, indicated here with y, provided by respective sensors in the motor vehicle 1.

In detail, the estimation stage 10c of the control system 10 further comprises a subtractor stage 21, configured to receive at a sum input the measurements y and at a difference input the corresponding estimates $\bar{y}$ and to output a corresponding difference $\Delta$; and a correction stage 22, configured to apply a correction factor K to this difference $\Delta$ and provide at an input of the state estimator 20 a corresponding correction factor $K \cdot \Delta$, based on which the state estimator 20 is able to correct the estimation algorithms implemented for generating the vector of estimates $\bar{y}$ (in general, given that there are multiple states to be corrected, $\Delta$ can be a vector and K can be a matrix).

In more detail, in a possible implementation, the dynamic model implemented by the digital twin model 12 of the first control loop 10a is a model of the dynamic behavior of the motor vehicle 1, of the so-called "double track" type, which is performed in real time in the aforesaid electronic control unit 6 of the motor vehicle 1.

In particular, such dynamic model can be described by the following equations:

$$\begin{cases} \widehat{\dot{v_x}} = \widehat{a_x} + \omega_z \cdot \widehat{v_y} \\ \\ \widehat{\dot{v_y}} = \widehat{a_y} - \omega_z \cdot \widehat{v_x} \end{cases}$$

where:

$$\widehat{a_x} = \frac{1}{m} \cdot \left[ (F_{x,fl} + F_{x,fr}) \cos(\delta_f) - (F_{y,fl} + F_{y,fr}) \sin(\delta_f) + F_{x,rl} + F_{x,rr} \right];$$

$$\widehat{a_y} = \frac{1}{m} \cdot \left[ (F_{x,fl} + F_{x,fr}) \sin(\delta_f) + (F_{y,fl} + F_{y,fr}) \cos(\delta_f) + F_{y,rl} + F_{y,rr} \right].$$

Figure 4 shows a schematic depiction of the motor vehicle 1, which shows, among other features, the main quantities of the aforesaid dynamic model, which intervene in the aforesaid equations. In particular, such quantities are the following: $F_x$ and $F_y$, which represent the longitudinal force and the lateral force at the wheels of the motor vehicle 1, with the suffixes 'fl', 'fr', 'rl' and 'rr', denoting respectively the left front wheel, the right front wheel, the left rear wheel and the right rear wheel;

    m, which is the mass of the motor vehicle 1;
    CG, which is the center of gravity of the motor vehicle;
    $\omega_z$, which is the angular rate about a vertical axis passing through the center of gravity CG;
    $\delta_f$, which is the steering angle;
    $v_x$ and $v_y$, which are, respectively, the longitudinal speed and the lateral speed of the motor vehicle 1; and
    $a_x$ and $a_y$, which are, respectively, the longitudinal acceleration and the lateral acceleration of the motor vehicle 1.

In particular, it is noted that the aforesaid longitudinal and lateral forces at the wheels of the motor vehicle 1 can be estimated using the known "Pacejka formula", applied to the dynamics of the tires; in a known manner, the Pacejka model (see, for example, Hans Pacejka, "Tire and vehicle dynamics", Elsevier, 2005) is widely used in studies of vehicle dynamics and is based on a semi-empirical model of the tire to calculate forces and moments acting on the same tire.

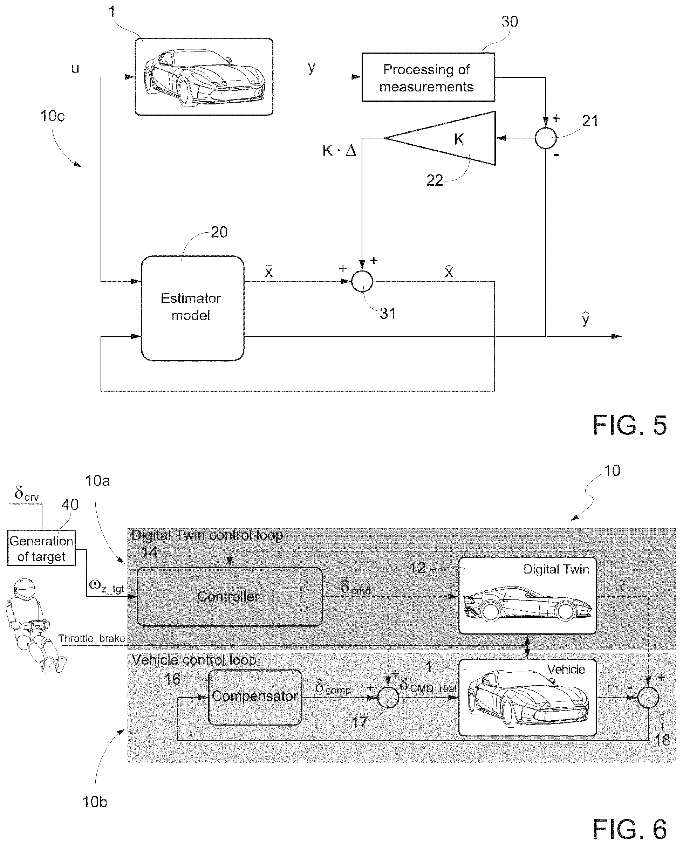

With reference to Figure 5, a possible embodiment of the estimation stage 10c of the control system 10, in which the aforesaid state estimator 20 is implemented, is now described in further detail.

In such embodiment, the state estimator 20 is based on a Kalman filter, which implements a two-degree-of-freedom non-linear mathematic model with correction.

In particular, the state estimator 20 is configured to receive a vector of inputs u, which includes a plurality of quantities associated with the behavior of the motor vehicle 1, including, for example: angular velocities (yaw rate), steering angles, forces at the tires, velocity at the wheels, jolting of the suspension measured with potentiometers, etc.

Such input vector u is also shown as an input to the motor vehicle 1, determining its dynamic behavior and in particular the aforesaid measurements y, which are provided as an input to the subtractor stage 21, in this case through a processing stage 30 (which can perform, if required, suitable processing, for example amplification and filtering, of the same measurements y).

The aforesaid correction factor K·Δ is, in this case, applied to internal states of the model, indicated here with x̄, which, after the correction (applied in a summing stage 31), are taken as an input to the same state estimator 20 (in order to be used at the next time instant as the initial integration condition).

In more detail, in a possible implementation, the aforesaid model can be described through the following equations:

$$\begin{cases} \dot{v_x} = \widehat{a_x} + \omega_z \cdot v_y + K_{a_x}(\widetilde{a_x} - \widehat{a_x}) \\ \\ \dot{v_y} = \widehat{a_y} - \omega_z \cdot v_x + K_{a_y}(\widetilde{a_y} - \widehat{a_y}) \end{cases}$$

where $v_x$, $v_y$ are the double track model states, i.e. the longitudinal and lateral speeds of the motor vehicle 1; and $K_{ax}$ and $K_{ay}$ are multiplication factors that define the aforesaid correction factor K.

With reference to Figure 6, a possible example of implementation of the aforesaid control system 10, for a control application for the steering angle $\delta_f$ in a "steer-by-wire" type system, is now described.

In this case, the digital controller 14 is configured to receive as an input, from a target generation stage 40, a target yaw rate $\omega_{z\_tgt}$, generated on the basis of a steering angle imparted by the driver $\delta_{driv}$.

The digital controller 14 is therefore configured to output a command $\tilde{\delta}_{cmd}$, designed to be provided to an actuator device coupled to the steering, to determine the steering actuation angle in the motor vehicle 1.

The compensator 16 is configured, in this case, to output, as a compensation signal $S_{comp}$, a compensation steering angle $\delta_{comp}$, for compensation of the control action, before sending the actual command to the motor vehicle 1, indicated here with $\delta_{CMD\_real}$.

In this case, the digital twin model 12 also receives as an input, as quantities associated with the behavior of the motor vehicle 1, signals of activation, by the driver of the motor vehicle 1, of the accelerator ("Throttle") and the brakes ("Brake").

The advantages that can be obtained with the present solution emerge clearly from what has been discussed.

In any case, it is once again noted that the present control solution allows to achieve improved performance with respect to known solutions, thanks to the fact that the main control loop is closed on an ideal model that has no measurement noise and uncertainties.

In this regard, with particular reference to the exemplary implementation of Figure 6, Figures 7A-7C and 8A-8C show plots of the control performance, respectively for a solution of a known type (i.e., with control loop closed on the actual vehicle) and for the present solution (using the digital twin model for closing the control loop). In particular, the trends shown are obtained with the same calibration of the PID controller (for example, calibrated with a bandwidth at 7 Hz).

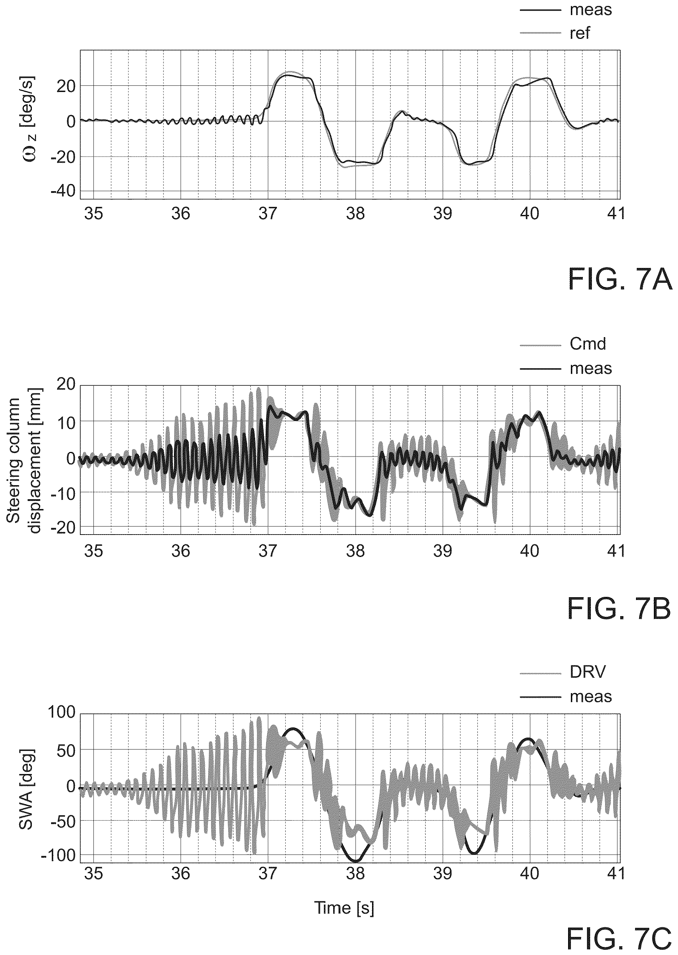

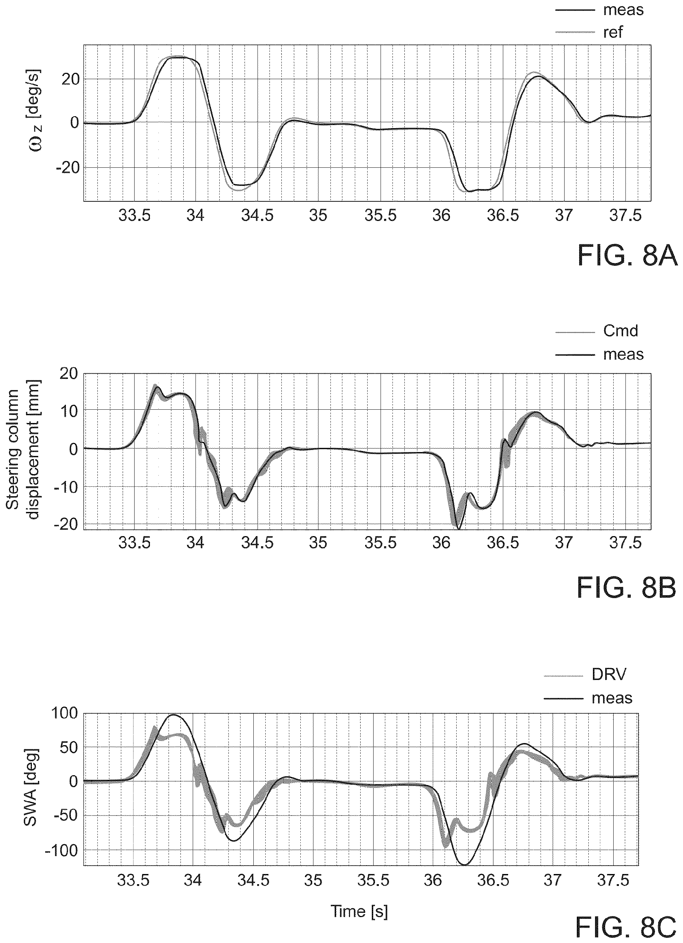

Figures 7A and 8A compare the trend of the angular velocity $\omega_z$, showing both the reference ('ref') trend and the measured ('meas') trend following the control action; Figures 7B and 8B compare the trend of displacement of the steering column, once again showing both the command ('Cmd') and the trend measured ('meas') following the control action; and Figures 7C and 8C compare the trend of the Steering Wheel Angle (SWA), showing both the steering angle imparted by the driver ('drv'), and the actual command ('Cmd') provided by the control action.

In general, the aforesaid plots show how the control action implemented using the digital twin model 12 allows to obtain a trend without noise and that, in general, faithfully replicates the reference quantity (or control target).

In particular, in the 'known solution', it would be possible to reduce the oscillations of the control action by derogating from the performance of the controller, reducing the bandwidth (for example, below 7 Hz); in contrast, the 'present solution' guarantees better performance, given that, with a bandwidth that can be higher (for example, 7 Hz) the control action does not have oscillations.

As already indicated previously, the present solution allows the control system to be calibrated and validated more easily (given that the calibration during simulation can be the same one that is used in the vehicle).

In conclusion, it is clear that changes and variants may be made to what is described without however deviating from the scope of the present invention, as defined by the appended claims.

It is clear, in particular, that the solution described can be advantageously applied in a vehicle, independently of the type of the vehicle or the actuator device being controlled.

**Claims**

1. A control system (10), configured to implement a real-time control of at least one actuator device (7) in a vehicle (1), comprising a first control loop (10a) including: a digital twin model (12), configured to implement a virtual representation replicating the behavior of the vehicle (1); and a digital controller (14), configured to output a control signal (SCMD), designed to be provided to the actuator device (7) of the vehicle (1), based on a feedback control loop closed on said digital twin model (12).

2. The system according to claim 1, wherein said digital twin model (12) is configured to output a vector of states ($\bar{r}$), including a plurality of quantities associated with the dynamic behavior of the vehicle (1); and wherein said first control loop (10a) comprises a subtractor stage (15), configured to implement a difference between a target control signal (St) and a state signal ($S_{\bar{r}}$) provided as an output from the digital twin model (12) and included in said vector of states ($\bar{r}$) and to generate an error signal ($S_e$) provided as an input to the digital controller (14); said digital controller (14) being configured to generate said control signal ($S_{CMD}$) as a function of said error signal ($S_e$).

3. The system according to claim 2, wherein said control signal ($S_{CMD}$) is provided as an input to said digital twin model (12), so as to replicate the control action implemented on the vehicle (1) and so that said digital twin model (12) modifies accordingly the vector of states ($\bar{r}$) provided as an output.

4. The system according to any one of the preceding claims, wherein said digital twin model (12) is configured to implement a "double track" model of the dynamic behavior of the vehicle (1), suitable for execution in real time in an electronic control unit (6) of the vehicle (1).

5. The system according to claim 4, wherein said dynamic model is described by the following equations:

$$\begin{cases} \widehat{\dot{v}_x} = \widehat{a_x} + \omega_z \cdot \widehat{v_y} \\ \\ \widehat{\dot{v}_y} = \widehat{a_y} - \omega_z \cdot \widehat{v_x} \end{cases}$$

where:

$$\widehat{a_x} = \frac{1}{m} \cdot \left[ \left( F_{x,fl} + F_{x,fr} \right) \cos(\delta_f) - \left( F_{y,fl} + F_{y,fr} \right) \sin(\delta_f) + F_{x,rl} + F_{x,rr} \right];$$

$$\widehat{a_y} = \frac{1}{m} \cdot \left[ \left( F_{x,fl} + F_{x,fr} \right) \sin(\delta_f) + \left( F_{y,fl} + F_{y,fr} \right) \cos(\delta_f) + F_{y,rl} + F_{y,rr} \right],$$

wherein:

$F_x$ and $F_y$ represent a longitudinal force and, respectively, a lateral force at the wheels of the vehicle (1), with the suffixes 'fl', 'fr', 'rl' and 'rr' denoting respectively a left front wheel, a right front wheel, a left rear wheel and a right rear wheel;
m is the mass of the vehicle (1);
CG is the center of gravity of the vehicle (1);
$\omega_z$ is the angular rate about a vertical axis passing through the center of gravity CG;
$\delta_f$ is the steering angle;
$v_x$ and $v_y$ are, respectively, a longitudinal speed and a lateral speed of the vehicle (1); and
$a_x$ and $a_y$ are, respectively, a longitudinal acceleration and a lateral acceleration of the vehicle (1).

6. The system according to any one of the preceding claims, comprising a second control loop (10b) configured to generate a compensation of the control action implemented by the first control loop (10a) prior to providing an actual command to the actuator device (7) of the vehicle (1), based on a difference between an actual behavior of the vehicle (1) and a behavior replicated by said digital twin model (12).

7. The system according to claim 6, wherein said second control loop (10b) comprises a compensator (16), configured to output a compensation signal ($S_{comp}$), based on a difference between measurements (r) provided by a plurality of sensors arranged on-board the vehicle (1) and states ($\bar{r}$) output by said digital twin model (12); and a first combination stage (17), configured to receive as an input said compensation signal ($S_{comp}$) and said control signal ($S_{CMD}$) and to generate an actual control signal ($S_{CMD\_real}$), designed to be provided to the actuator device (7) of the vehicle (1) to implement an actual control action.

8. The system according to claim 7, wherein said first combination stage (17) is a summing stage and is configured to generate said actual control signal ($S_{CMD\_real}$) as a sum between said compensation signal ($S_{comp}$) and said control signal ($S_{CMD}$).

9. The system according to claim 7 or 8, wherein said second control loop (10b) comprises a second combination stage (18), configured to receive as an input said states ($\bar{r}$) output by said digital twin model (12) and said measurements (r) provided by the sensors arranged on-board the vehicle (1), and to provide as an output a difference vector ($\Delta r$), based on a difference between said states ($\bar{r}$) and said measurements (r); said difference vector (($\Delta r$) being provided as an input to the compensator (16) and being indicative of the difference between the actual behavior of the vehicle (1) and the behavior replicated by the digital twin model (12).

10. The system according to any one of claims 6-9, further comprising an estimation stage (10c), including a state estimator (20), configured to implement estimation algorithms, to output estimates ($\bar{y}$) of a plurality of quantities associated with the vehicle behavior (1); wherein said second control loop (10b) further includes a concatenator stage (19), configured to receive as inputs both the measurements (r) provided by the sensors arranged on-board the vehicle (1) and the estimates ($\overline{y}$) provided by the state estimator (20); said second control loop (10b) being configured to compare both the measurements (r) and the estimates ($\overline{y}$) with the states ($\tilde{r}$) output by the digital twin model (12) to generate said compensation of the control action.

11. The system according to claim 10, wherein said state estimator (20) is based on a Kalman filter, implementing a two-degree-of-freedom non-linear model with correction.

12. The system according to claim 10 or 11, wherein said state estimator (20) is configured to receive as an input a correction factor, which is a function of a deviation between at least some of the estimates ($\overline{y}$) and corresponding measurements (y) provided by respective sensors on-board the vehicle (1).

13. The system according to claim 12, wherein said estimation stage (10c) comprises: a subtractor stage (21), configured to receive at a sum input said measurements (y) and at a difference input the corresponding estimates ($\overline{y}$) and to output a corresponding difference ($\Delta$); and a correction stage (22), configured to apply a correction factor (K) to said difference ($\Delta$) and provide at an input of the state estimator (20) a corresponding correction factor (K·$\Delta$), based on which said state estimator (20) is able to correct the estimation algorithms implemented for generating the estimates ($\overline{y}$).

14. A vehicle (1), comprising at least one electronic control unit (6), configured to implement the control system (10) according to any one of the preceding claims.

15. An automotive control software storable in, and executable by, at least one electronic control unit (6) of a vehicle (1), to cause, when executed, the control unit (6) to become configured to implement the control system (10) according to any one of the preceding claims.

FIG. 1

FIG. 2

2/5

FIG. 3

FIG. 4

FIG. 5

FIG. 6

FIG. 7A

FIG. 7B

FIG. 7C

FIG. 8A

FIG. 8B

FIG. 8C

# EUROPEAN SEARCH REPORT

Application Number

EP 25 20 1557

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FEDERICO DETTÙ ET AL: "The Twin-in-the-Loop approach for vehicle dynamics control", ARXIV.ORG, CORNELL UNIVERSITY LIBRARY, 201 OLIN LIBRARY CORNELL UNIVERSITY ITHACA, NY 14853, 21 July 2023 (2023-07-21), XP091569538, DOI: 10.1109/TMECH.2023.3292503 | 1-4,6-9, 14,15 | INV. B60W50/06 B60W30/045 B62D6/00 |
| Y | * Sections II-IV; | 5 | |
| A | figures 2(a), 7 * | 10-13 | |
| Y | CN 113 276 862 A (ZHIXIN CONTROL SYSTEM CO LTD) 20 August 2021 (2021-08-20) * pages 2, 7 * | 5 | |
| X | FEDERICO DETTÙ ET AL: "Optimization tools for Twin-in-the-Loop vehicle control design: analysis and yaw-rate tracking case study", ARXIV.ORG, CORNELL UNIVERSITY LIBRARY, 201 OLIN LIBRARY CORNELL UNIVERSITY ITHACA, NY 14853, 5 September 2023 (2023-09-05), XP091731149, DOI: 10.1016/J.EJCON.2024.100998 * Section 3 * | 1-4,6-9, 14,15 | |
| A | CN 118 025 198 A (RES INST HIGHWAY MINI TRANSP; UNIV CHONGQING; WUHAN DAAN TECH CO LTD) 14 May 2024 (2024-05-14) * the whole document * | 1-15 | |
| A | DE 10 2007 013261 A1 (FORD GLOBAL TECH LLC [US]) 25 September 2008 (2008-09-25) * page 4 * | 1-15 | |

**TECHNICAL FIELDS SEARCHED (IPC)**

B60W

The present search report has been drawn up for all claims

| Place of search | Date of completion of the search | Examiner |
|---|---|---|
| Munich | 7 January 2026 | Nielles, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                               

& : member of the same patent family, corresponding document

EPO FORM 1503 03.82 (P4C01)

## EP 4 714 774 A1

## ANNEX TO THE EUROPEAN SEARCH REPORT
## ON EUROPEAN PATENT APPLICATION NO.

EP 25 20 1557

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2026

| Patent document cited in search report | Publication date | Patent family member(s) | Publication date |
|---|---|---|---|
| CN 113276862 A | 20-08-2021 | NONE | |
| CN 118025198 A | 14-05-2024 | NONE | |
| DE 102007013261 A1 | 25-09-2008 | NONE | |

EPO FORM P0459

For more details about this annex : see Official Journal of the European Patent Office, No. 12/82

**EP 4 714 774 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102024000020779